# EUROPÄISCHE PATENTANMELDUNG

(11) **EP 3 159 536 A1**
(43) Veröffentlichungstag der Anmeldung: **26.04.2017**
(21) Anmeldenummer: 16192558.1
(22) Anmeldetag: 06.10.2016
(51) Int. Cl.: F03D 1/06, F03B 17/06

(54) **ROTORANORDNUNG FÜR EINE TURBINE**

(30) Priorität: 15.10.2015 DE 102015117520
(71) Anmelder: SCHOTTEL Hydro GmbH, 56322 Spay (DE)
(72) Erfinder: Baldus, Martin, 56459 Rotenhain (DE)
(74) Vertreter: Wagner Albiger & Partner Patentanwälte mbB

(57) **Zusammenfassung**

Die Erfindung betrifft eine Turbine mit mehreren Flügeln (1), die sich jeweils von einem Flügelfuß (10) über ein Flügelprofil (11) bis zu einer Flügelspitze (12) erstrecken und mit ihrem Flügelfuß (10) an einer drehbaren Nabe (2) in einem Anschlussbereich (22) zwischen einer Nabenspitze (20) und einem Nabenende (21) derselben befestigt sind, wobei der Flügelfuß (10) einen zur Nabenspitze (20) weisenden ersten Steg (13) und einen zum Nabenende (21) weisenden zweiten Steg (14) aufweist, die jeweils über das Flügelprofil (11) vorstehen und die Nabe (2) entsprechende, den ersten und zweiten Steg (13, 14) formschlüssig aufnehmende Nuten (23, 24) aufweist.

## Beschreibung

Die Erfindung betrifft eine Turbine mit mehreren Flügeln, die sich jeweils von einem Flügelfuß über ein Flügelprofil bis zu einer Flügelspitze erstrecken und mit ihrem Flügelfuß an einer drehbaren Nabe in einem Anschlussbereich zwischen einer Nabenspitze und einem Nabenende derselben befestigt sind.

Derartige Turbinen sind einschlägig bekannt und werden beispielsweise in Wind- und Wasserkraftwerken verwendet, um bei Anströmung mit einem entsprechenden Fluidstrom über die drehbare Nabe einen Generator anzutreiben.

Insbesondere bei Gezeitenkraftwerken mit horizontaler Drehachse, die im Aufbau heutigen Windkraftanlagen sehr ähnlich sind, stellt sich das Problem einer geeigneten Befestigung der Flügel an der Nabe. Die besondere Herausforderung liegt insbesondere in der Materialpaarung, da die Flügel üblicherweise aus Faserverbundwerkstoffen und die Nabe aus Metall, insbesondere Stahl hergestellt sind und sehr hohe Kräfte und Momente am Flügelfuß wirken.

Eine Möglichkeit der Verbindung sind Stahlflansche, bei denen der Flügelfuß zwischen einem inneren und äußeren Flansch eingeklemmt und die beiden Flansche miteinander verschraubt werden. Verbindungen dieser Bauart sind jedoch mit dem Nachteil eines extrem hohen Gewichts und hohen Herstellkosten verbunden.

Eine weitere Möglichkeit zur Anbindung der Flügel an die Nabe ist durch Ausgestaltung eines so genannten Querbolzenanschlusses gegeben, der in abgewandelter Form auch bei Möbelbauteilen Anwendung findet. Auch hier ist jedoch die Fertigung sehr aufwendig und insbesondere mit Fräsarbeiten verbunden, was verbesserungswürdig erscheint.

Ergänzend wird zum Stand der Technik auch auf die DE 10 2006 014 742 A1 verwiesen, bei der der Flügelfuß durch eine Vielzahl von quer zur Längsachse des Flügels verlaufende Querbohrungen im Bereich des Flügelfußes an einer speziell ausgebildeten Halterung der Nabe befestigt werden. Auch dies ist äußerst aufwendig.

Aufgabe der Erfindung ist es daher, eine Turbine der eingangs genannten Art vorzustellen, die sich besonders rationell fertigen lässt und höchste Festigkeiten der Verbindung zwischen Flügel und Nabe gewährleistet.

Zur Lösung der gestellten Aufgabe wird erfindungsgemäß die Ausgestaltung einer Turbine mit den Merkmalen des Patentanspruchs 1 vorgeschlagen.

Vorteilhafte Ausgestaltungen und Weiterbildungen der Erfindung sind Gegenstand der abhängigen Ansprüche.

Die Erfindung schlägt vor, dass der Flügelfuß einen zur Nabenspitze weisenden ersten Steg und einen zum Nabenende weisenden zweiten Steg aufweist, die jeweils über das Flügelprofil vorstehen und die Nabe entsprechende, den ersten und zweiten Steg formschlüssig aufnehmende Nuten aufweist.

Insoweit werden die Flügel der erfindungsgemäßen Turbine in passgenau gefertigte Nuten an der Nabe eingeschoben und dort verspannt. Durch entsprechende bauliche und nachfolgend noch näher erläuterte Maßnahmen wird der Flügel komplett an die Nabe angebunden und lässt sich äußerst schnell und wiederholgenau montieren, wobei nur geringkomplexe Teile zum Einsatz kommen, die rationell und mit verringertem Aufwand hergestellt werden können.

Nach einem Vorschlag der Erfindung wird der Anschlussbereich der Nabe im Wesentlichen zylindrisch ausgebildet und der Flügelfuß weist eine hierzu korrespondierend ausgebildete zylindersegmentartige Anschlussfläche auf, mit welcher er mit dem zylindrischen Anschlussbereich in Verbindung steht. Die Anschlussflächen aller an der Nabe befestigten Flügel sind vorteilhaft so ausgebildet, dass sie gemeinsam den zylindrischen Anschlußbereich nach Art eines Mantelrohrabschnittes einhüllen. Die entsprechenden Stege ergänzen sich in diesem Falle zu einem von den Stegen gebildeten segmentierten Ring, der in einer entsprechend ringförmig ausgebildeten Nut der Nabe formschlüssig aufgenommen wird.

Nach einem weiteren Vorschlag der Erfindung wird im Bereich der Nabenspitze ein Spannring befestigt, der die Nabe unter Ausbildung einer der Nuten übergreift. Es ist somit möglich, zunächst die Flügel auf den Anschlussbereich der Nabe aufzusetzen und den zweiten Steg in die entsprechende Nut am Nabenende einzuschieben und anschließend im Bereich der Nabenspitze den Spannring anzubringen, welcher sodann unter Ausbildung der gegenüberliegenden Nut auch den im Bereich der Nabenspitze angeordneten ersten Steg formschlüssig aufnimmt und durch Aufbringen entsprechender Spannkräfte formschlüssig einspannt. Die auftretenden Kräfte, resultierend aus dem Biegemoment der Flügel bei Betrieb der erfindungsgemäßen Turbine können von daher optimal aufgenommen und als Tangentialkraft auf die Nabe verteilt werden.

Nach einem weiteren Vorschlag der Erfindung sind die Nuten mit Einführschrägen ausgebildet, was ein vollflächiges Anliegen der Stege sowohl auf dem Innendurchmesser als auch auf dem Außendurchmesser der Nuten gewährleistet.

Darüber hinaus kann vorgesehen sein, dass zwischen Flügelfuß und Nabe eine Passfeder vorgesehen ist, die z.B. in entsprechende Längsnuten in der Nabe und dem Flügelfuß eingelegt ist, um auftretende Biegemomente abzufangen.

Überdies ergeben sich durch die spezielle Ausgestaltung des Flügelfußes mit den vorstehenden Stegen vorteilhafte Hebelverhältnisse, die den angreifenden Kräften und Momenten am Flügel wirksam entgegenwirken.

Nach einem weiteren Vorschlag der Erfindung ist der Flügelfuß bevorzugt symmetrisch ausgebildet, was es ermöglicht, die erfindungsgemäße Turbine unter Verwendung gleichbleibender Flügel sowohl als vorderseitig angeströmte Turbine als auch für einen Leeläufer (downstream turbine) zu verwenden, da es in diesem Falle lediglich notwendig ist, die Flügel in der entgegengesetzten Orientierung an der Nabe zu befestigen, d.h. die Zuordnung der vorstehenden Stege und der entsprechenden Nuten wird umgekehrt.

Zur Einsparung überschüssigen Gewichts ist es überdies möglich, die Nabe im Anschlussbereich mit einer Aussparung auszubilden.

Weitere Ausgestaltungen und Einzelheiten der Erfindung werden nachfolgend anhand der ein Ausführungsbeispiel darstellenden Zeichnung erläutert. Es zeigen:
- Figur 1: die Seitenansicht einer erfindungsgemäßen Turbine;
- Figur 2: einen Schnitt durch die Nabe der Turbine gem. Figur 1;
- Figur 3: die Einzelheit X in Figur 2 in vergrößerter Darstellung;
- Figur 4: in schematisierter Darstellung die an einer Turbine angreifenden Kräfte und Momente.

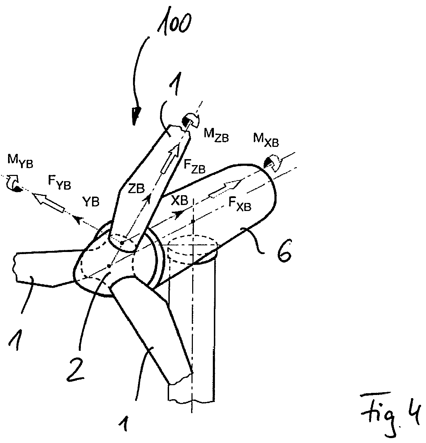

Die nachfolgend erläuterte Turbine ist beispielsweise zum Einsatz bei Gezeitenkraftwerken geeignet, ein solches Gezeitenkraftwerk ist schematisch in der Figur 4 dargestellt und mit Bezugszeichen 100 gekennzeichnet. Es besteht aus einem nicht näher dargestellten Generator 6, der über eine drehbare Nabe 2 mit mehreren daran befestigten Flügeln 1 von einem strömenden Fluid, beispielsweise einem durch Gezeiten bedingten Wasserstrom angetrieben wird.

An der Verbindungsstelle jedes einzelnen Flügels 1 zur Nabe 2 müssen Schubkräfte F_{XB} und die daraus resultierenden sehr hohen Biegemomente M_{YB} in die Nabe 2 übertragen werden. Zudem muss das Biegemoment M_{XB} übertragen werden, welches auf der Turbinenwelle das energieübertragende Drehmoment für den Generator 6 erzeugt. Damit in Verbindung steht auch eine Querkraft F_{YB}. Nachrangig existieren noch Normalkräfte in Längsrichtung F_{ZB}, die aus den Massenkräften des Flügels 1 resultieren, sowie das Spindelmoment M_{ZB}, welches aus der hydrodynamischen Anströmung des Gezeitenkraftwerks 100 resultiert.

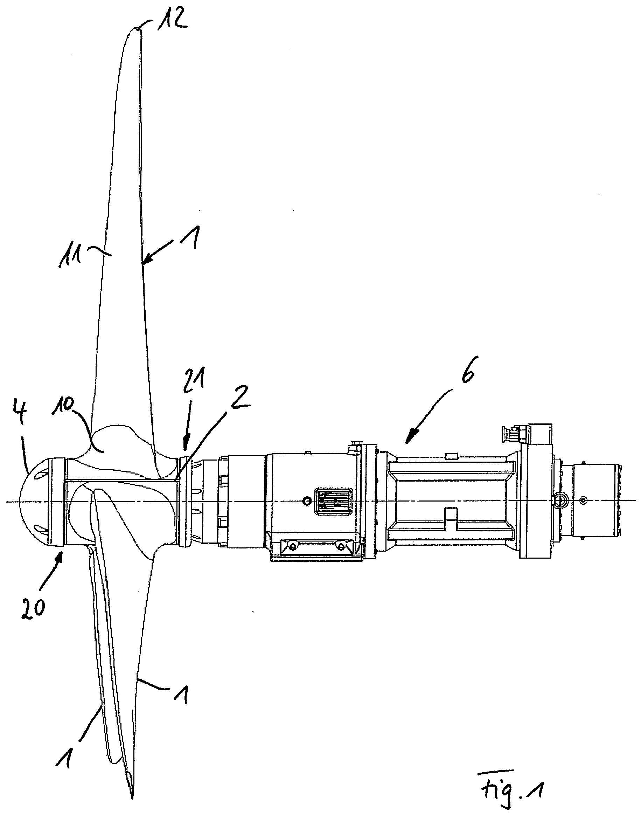

Um diese Kräfte und Momente möglichst optimal bei einer fertigungstechnisch vorteilhaften Gestaltung aufnehmen zu können, wird eine Turbine des aus den Figuren 1 bis 3 näher ersichtlichen Aufbaus verwendet.

Die einzelnen Flügel 1 weisen in an sich bekannter Weise einen Flügelfuß 10 sowie eine Flügelspitze 12 auf, zwischen denen sich ein Flügelprofil 11 erstreckt. Im Bereich des Flügelfußes 10 sind sämtliche Flügel 1 mit der Nabe 2 verbunden, wozu diese einen Anschlussbereich 22 aufweist, der in Längsachsenrichtung der Turbine vorder- bzw. anströmseitig von einer Nabenspitze 20 und rückwärtig von einem Nabenende 21 begrenzt wird.

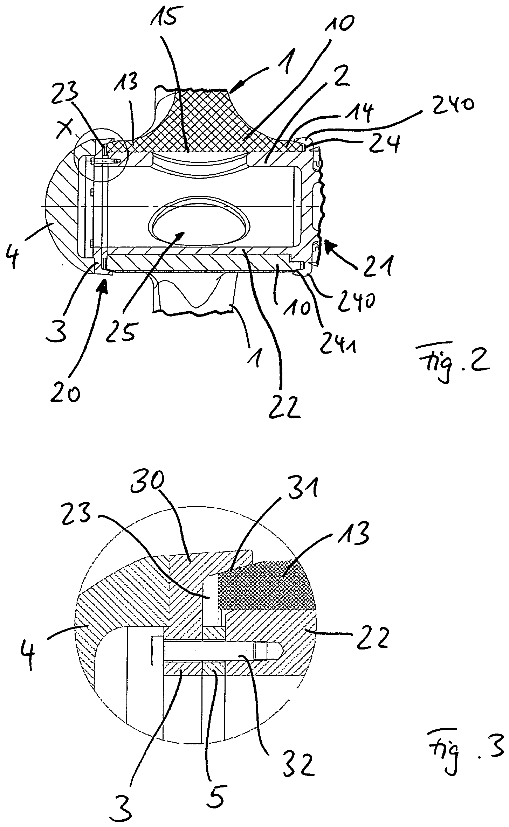

Wie insbesondere aus der Schnittdarstellung in der Figur 2 ersichtlich, erweitert sich der Flügelfuß 10 eines jeden Flügels unter Ausbildung eines ersten vorderen Steges 13 bzw. eines zweiten rückwärtigen Steges 14 über das Flügelprofil hinaus. Dabei weist der erste Steg 13 in Richtung der Nabenspitze 20 und der zweite Steg 14 in Richtung des Nabenendes 21.

Die Nabe 2 ist in dem von Nabenspitze 20 und Nabenende 21 begrenzten Anschlussbereich 22 als Hohlzylinder ausgebildet, wobei die Flügelfüße 10 unter Einschluss der ersten und zweiten Stege 13, 14 eine entsprechend zylindersegmentartige Anschlussfläche 15 ausbilden, mit welcher sie auf dem zylindrischen Anschlussbereich 22 der Nabe 2 aufliegen. Zur weiteren Gewichtsersparnis kann die Nabe 2 in dem von jeder zylindersegmentartigen Anschlussfläche 15 der Flügelfüße 10 überspannten Bereich eine Ausnehmung 25 aufweisen, die vollständig vom Flügelfuß 10 überdeckt wird.

Die Anschlussflächen 15 aller an der Nabe 2 befestigten Flügel 1 sind so dimensioniert, dass sie gemeinsam den zylindrischen Anschlußbereich 22 nach Art eines Mantelrohrabschnittes einhüllen. Die Stege 13, 14 bilden somit jeweils einen segmentierten Ring um den zylindrischen Anschlussbereich 22.

Im Bereich des Nabenendes 21 ist entsprechend eine den zweiten Steg 14 des Flügelfußes 10 aufnehmende Nut 24 ausgebildet. Diese wird von einem etwa L-förmig über den zylindrischen Anschlussbereich 22 überstehenden Steg 240 der Nabe 2 gebildet und weist eine Einführschräge 241 für den aufzunehmenden Steg 14 auf. Entsprechend der ringförmigen Gestalt des zweiten Steges 14 ist auch die Nut 24 ringförmig ausgebildet.

Der Flügelfuß 10 ist so auf dem zylindrischen Anschlussbereich 22 der Nabe 2 aufgesetzt, dass der Steg 14 mit seinem freien Ende formschlüssig in der Nut 24 aufgenommen ist, wobei die Einführschräge 241 sicherstellt, dass ein vollflächiges Anliegen des Steges 14 sowohl am Innendurchmesser der Nut 24, die vom zylindrischen Anschlussbereich 22 gebildet wird, als auch am Außendurchmesser der Nut 24, der vom L-förmigen Steg 240 gebildet wird, gewährleistet ist.

Auf der gegenüberliegenden Seite im Bereich der Nabenspitze 20 kommt der erste ebenfalls ringförmige Steg 13 zum Liegen. Mittels Spannschrauben 32 unter Zwischenlage eines Distanzringes 5 ist ein Spannring 3 in den zylindrischen Anschlussbereich 22 stirnseitig eingeschraubt, so dass der Spannring 3 mit einem übergreifenden Steg 30 den zylindrischen Anschlussbereich 22 der Nabe 2 im Bereich der Nabenspitze 20 übergreift und gemeinsam mit dem zylindrischen Anschlussbereich 22 eine ringförmige Nut 23 ausbildet und den Steg 13 formschlüssig aufnimmt.

Auch der übergreifende Steg 30 weist eine Einführschräge 31 auf, so dass der Steg 13 sowohl am Innendurchmesser als auch am Außendurchmesser, bestimmt durch den zylindrischen Anschlussbereich 22 und den übergreifenden Steg 30 vollflächig anliegt. Durch Variation des Anzugsmomentes der Spannschrauben 32 kann insoweit eine vollständige formschlüssige Anbindung der Flügel 1 im Bereich ihrer Flügelfüße 10 an die Nabe 2 gewährleistet werden.

Schließlich wird zum stirnseitigen Verschluss der Nabe 2 und des darauf angebrachten Spannringes 3 noch ein Deckel 4 angebracht, beispielsweise mit dem Spannring 3 in nicht näher dargestellter Weise verschraubt.

Zwischen dem Flügelfuß 10 und dem zylindrischen Anschlussbereich 22 der Nabe kann überdies in hier nicht dargestellter Weise auch noch eine Passfeder in entsprechenden Längsnuten vorgesehen sein, um eine formschlüssige Welle-Nabe-Verbindung zur Aufnahme der auftretenden Momente und Kräfte zu gewährleisten.

Wesentliche Vorteile der vorangehend beschriebenen Befestigung der Flügel 1 an der Nabe 2 sind, dass die bisher unvermeidliche aufwendige Fräsbearbeitung am Flügelfuß zur Aufnahme von Verbindungsmitteln, wie Querbolzen vollständig entfallen kann und die Wandstärke des Flügels deutlich geringer ausfallen kann, als es z.B. bei der bisher üblichen Querbolzenanbindung der Fall war. Bisher musste auf die erwartete Flächenpressung unter dem Querbolzen Rücksicht genommen werden und eine entsprechende Wandstärke des Flügels vorgesehen werden, was erhöhten Materialaufwand und auch Zeitaufwand bei der Herstellung des Flügels mit sich brachte, da derartige Flügel nur in zwei Schritten laminiert werden konnten.

Durch die erhebliche verbesserte Verteilung der auftretenden Lasten kann insgesamt mit weniger Materialaufwand gearbeitet werden und der Montageaufwand verkürzt sich auf ein Minimum. Auch im Falle des verschleißbedingten Austausches einzelner Flügel ist eine schnelle Demontage und erneute Montage der Flügel an der Nabe gewährleistet.

Überdies besteht die Möglichkeit, den Flügelfuß in seiner Höhe im Wesentlichen auf die Höhe der Stege 13, 14 zu begrenzen, so dass die Kontur des Flügelprofils 11, welche für die Energieaufnahme verantwortlich ist, kontinuierlich in den Flügelfuß übergehen kann und sich die Verluste auf den inneren Radienschnitten reduzieren, was zu einem deutlich verbesserten hydrodynamischen Wirkungsgrad führt.

Durch die Fortführung des Flügelprofils bis an die Nabe lassen sich außerdem längere aber schlankere Konstruktionen erzielen als mit den bisherigen Flanschen. Diese vergrößerte Länge bringt den Vorteil mit sich, dass die Haltekraft, die dem Biegemoment M_{YB} entgegenwirkt, weiter verringert werden kann.

Überdies ist insbesondere aus der Darstellung gemäß Figur 2 ersichtlich, dass die einzelnen Flügel 1 einen symmetrischen Aufbau insbesondere im Bereich des Flügelfußes 10 aufweisen, so dass der gleiche Flügel, abweichend von der Darstellung in den Figuren, auch für Leeläufer (Downstreamturbine) verwendet werden kann, indem der Flügel lediglich in umgekehrter Orientierung montiert wird, d.h. der Steg 13 wird in die Nut 24 und umgekehrt der Steg 14 in die Nut 23 eingebracht.

Es versteht sich, dass die Anzahl der an der Nabe festlegbaren Flügel nicht auf die im Ausführungsbeispiel gezeigte Variante mit drei Flügeln 1 beschränkt ist, sondern es können auch größere und kleinere Anzahlen von Flügeln 1 vorgesehen werden.

Ebenso ist eine solche Flügel-Naben-Verbindung auch außerhalb von Gezeitenkraftwerken z.B. in Windkraftwerken und dergleichen mehr anwendbar.

## Patentansprüche

1. Turbine mit mehreren Flügeln (1), die sich jeweils von einem Flügelfuß (10) über ein Flügelprofil (11) bis zu einer Flügelspitze (12) erstrecken und mit ihrem Flügelfuß (10) an einer drehbaren Nabe (2) in einem Anschlussbereich (22) zwischen einer Nabenspitze (20) und einem Nabenende (21) derselben befestigt sind, **dadurch gekennzeichnet, dass** der Flügelfuß (10) einen zur Nabenspitze (20) weisenden ersten Steg (13) und einen zum Nabenende (21) weisenden zweiten Steg (14) aufweist, die jeweils über das Flügelprofil (11) vorstehen und die Nabe (2) entsprechende, den ersten und zweiten Steg (13, 14) formschlüssig aufnehmende Nuten (23, 24) aufweist.

2. Turbine nach Anspruch 1, **dadurch gekennzeichnet, dass** der Anschlußbereich (22) im Wesentlichen zylindrisch ausgebildet ist und der Flügelfuß (10) eine hierzu korrespondierend ausgebildete zylindersegmentartige Anschlussfläche (15) aufweist.

3. Turbine nach Anspruch 2, **dadurch gekennzeichnet, dass** die Anschlussflächen (15) aller an der Nabe (2) befestigten Flügel (1) gemeinsam den zylindrischen Anschlußbereich (22) nach Art eines Mantelrohrabschnittes einhüllen und die Stege (13, 14) gemeinsam einen segmentierten Ring ausbilden.

4. Turbine nach einem der Ansprüche 1 bis 3, **dadurch gekennzeichnet, dass** im Bereich der Nabenspitze (20) ein Spannring (3) befestigt ist, der die Nabe (2) unter Ausbildung einer der Nuten (23) übergreift.

5. Turbine nach einem der Ansprüche 1 bis 4, **dadurch gekennzeichnet, dass** die Nuten (23, 24) mit Einführschrägen (241, 31) ausgebildet sind.

6. Turbine nach einem der Ansprüche 1 bis 5, **dadurch gekennzeichnet, dass** zwischen Flügelfuß (10) und Nabe (2) eine Passfeder vorgesehen ist.

7. Turbine nach einem der Ansprüche 1 bis 6, **dadurch gekennzeichnet, dass** der Flügelfuß (10) symmetrisch ausgebildet ist.

8. Turbine nach einem der Ansprüche 1 bis 7, **dadurch gekennzeichnet, dass** die Nabe (2) im Anschlussbereich (22) eine Aussparung (25) aufweist.
